# EUROPÄISCHE PATENTSCHRIFT

(11) **EP 1 754 565 B1**
(45) Veröffentlichungstag und Bekanntmachung des Hinweises auf die Patenterteilung: **16.07.2008**
(21) Anmeldenummer: 05018055.3
(22) Anmeldetag: 19.08.2005
(51) Int. Cl.: B23Q 3/155, B23Q 3/157, B23Q 1/48

(54) **Werkzeugwechsler mit schwenkbarem und linear bewegbarem Werkzeugträger**
Tool changer with swingable and linear movable tool holder
Echangeur d'outils avec porte-outil tournant et mobile linéairement

(43) Veröffentlichungstag der Anmeldung: 21.02.2007
(73) Patentinhaber: Mikron Agie Charmilles AG, 2560 Nidau (CH)
(72) Erfinder: Condrau, Alexandre, 2710 Tavannes (CH)
(74) Vertreter: Weiss, Wolfgang

(56) Entgegenhaltungen:
- EP-A- 0 074 549
- EP-A- 0 522 498
- EP-A- 0 974 420
- EP-A- 1 016 497
- DE-A1- 4 300 745
- DE-A1- 10 163 294
- SU-A1- 1 481 025

## Beschreibung

Die Erfindung bezieht sich auf einen Werkzeugwechsler gemäss des Oberbegriffs von Anspruch 1.

Im Werkzeugmaschinenbau werden vermehrt Bearbeitungszentren mit Manipulatoren eingesetzt, die computergesteuert, d.h. ohne personelle Überwachung, nach einander verschiedene Bearbeitungen an Werkstücke durchführen. Zum Bearbeitungszentrum gehört unter anderem ein Werkzeuglager mit allen für die Bearbeitungsschritte nötigen Werkzeugen. Ein Werkzeugwechsler sorgt für den Transport der Werkzeuge zwischen dem Werkzeuglager und der Stelle, an die das Werkstück bearbeitet wird, beispielsweise der Spindel einer Hochgeschwindigkeitsfräse.

In der EP 1016497 A2 ist eine Werkzeugmaschine mit einem gattungsgemässen Werkzeugwechsler beschrieben. Der Werkzeugwechsler enthält für den Werkzeugtransport zwischen dem Werkzeugmagazin und einer Übergabeposition an der Bearbeitungsspindel mindestens einen Werkzeuggreifer zur Halterung von Werkzeugen für die Bearbeitungsspindel, die der Bereitstellung mehrerer Werkzeuge dient. Um eine automatische Versorgung sowohl der Arbeitsspindel als auch des in die Bearbeitungsspindel einwechselbaren Zusatzaggregates zu gewährleisten, enthält der Werkzeugwechsler mindestens einen zusätzlichen Werkzeuggreifer zur Halterung von Werkzeugen für das Zusatzaggregat.

Aus der DE 4300745 A1 ist ein anderer Werkzeugwechsler bekannt. Mit einem einzigen Motor wird sowohl eine Kurventrommel als auch ein Schwenkgetriebe angetrieben. Die Kurventrommel dient zur Steuerung der Hubbewegung des Werkzeugträgers entlang einer Welle und das Schwenkgetriebe dient zur Schwenkbewegung des Werkzeugträgers um die Welle. Das Schwenkgetriebe kommt nur zum Einsatz, nachdem der Werkzeugträger von der Kurventrommel in einer Endstellung gebracht wurde.

Ausgehend von diesem Stand der Technik ist es Aufgabe der Erfindung, einen Werkzeugwechsler anzugeben, der möglichst kompakt aufgebaut ist und der möglichst präzise und verschleissfrei arbeitet. Die Bewegungen des Werkzeugwechslers sollen auch möglichst ohne Zeitverlust, d.h. zeitgleich mit den übrigen Bearbeitungsschritten des Bearbeitungszentrums, durchgeführt werden können.

Diese Aufgabe wird durch das Kennzeichen von Anspruch 1 gelöst.

Bevorzugte Weiterbildungen der Erfindung ergeben sich aus den abhängigen Ansprüchen.

Es ist von Vorteil, dass der Werkzeugwechsler im Bearbeitungszentrum möglichst wenig Platz beansprucht. Der Werkzeugwechsler befindet sich nur solange im Arbeitsraum wie unbedingt nötig ist. Dies wird dadurch erreicht, dass die Führungsvorrichtung zwei parallel zu einander angeordneten und mit einander zusammen wirkenden Linearführungen in einer Hauptrichtung aufweist. Dies wird auch dadurch erreicht, dass der Werkzeugträger eine senkrecht zur ersten Hauptrichtung wirkende Stange aufweist.

Ein Ausführungsbeispiel der Erfindung wird anhand der Figuren beschrieben. Es zeigen:
Figur 1 eine perspektivische Sicht auf einen erfindungsgemässen Werkzeugwechsler,
Figur 2 eine weitere perspektivische Sicht auf den Werkzeugwechsler von Figur 1,
Figur 3 eine Sicht auf dem Werkzeugwechsler gesehen in der Richtung der Y-Achse,
Figur 4 eine Sicht auf dem Werkzeugwechsler gesehen in der Richtung der Z-Achse und
Figur 5 eine Sicht auf dem Werkzeugwechsler gesehen in der Richtung der X-Achse.

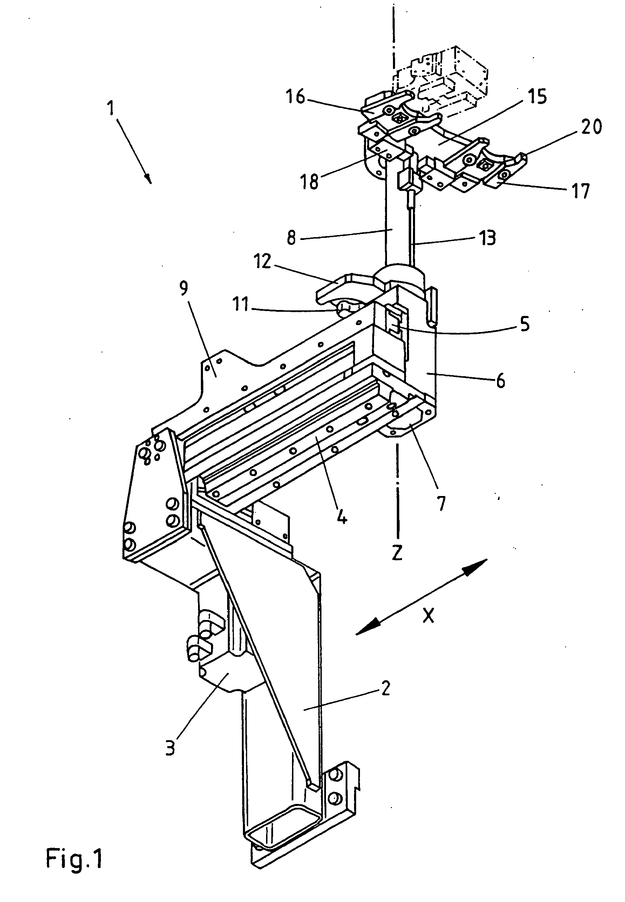

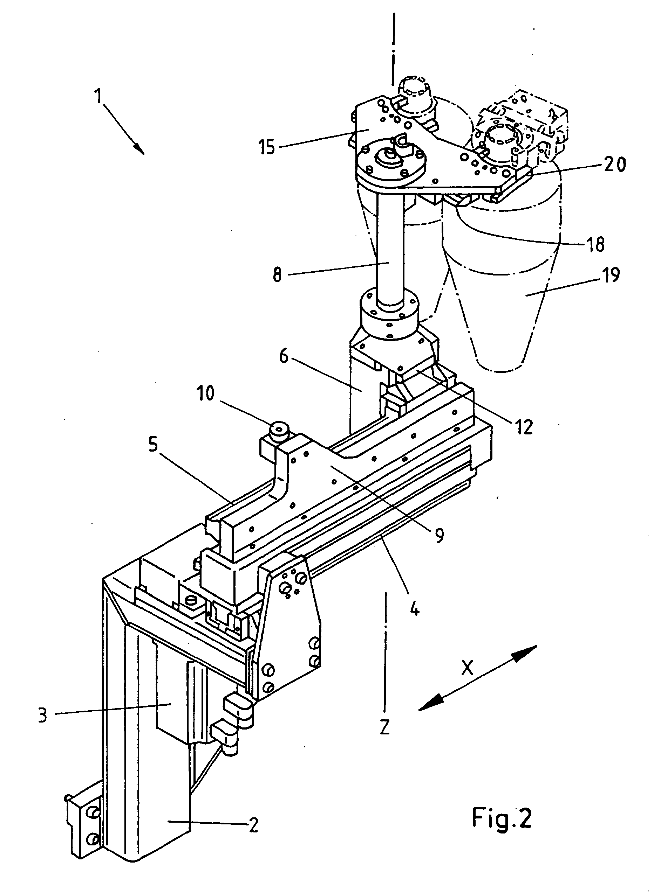

In Figuren 1 und 2 ist eine Vorrichtung 1 zum automatischen Wechseln von Werkzeugen für ein computergesteuertes Bearbeitungszentrum, beispielsweise eine Maschine zum Fräsen mit sehr hohen Spindeldrehzahlen perspektivisch dargestellt. Der Werkzeugwechsler 1 umfasst einen Grundkörper 2, mit dem der Werkzeugwechsler 1 am Rahmen eines Bearbeitungszentrums, das hier nicht abgebildet ist, befestigt werden kann. Am Grundkörper 2 ist auch ein Antriebsmotor 3 zur Betätigung des Werkzeugwechslers 1 ersichtlich. Sämtliche Bewegungen des Werkzeugwechslers 1 werden nach einander und/oder gleichzeitig mittels zeitversetzte und computergesteuerte Kopplungsvorgänge vom Antriebsmotor 3 ausgelöst. In diesem Ausführungsbeispiel ist der Antriebsmotor 3 als Servomotor oder Schrittmotor ausgeführt. Der Grundkörper 2 erstreckt sich im Wesentlichen in der Z-Richtung und wird durch Verschraubung am Rahmen ausserhalb des eigentlichen Arbeitsraumes des Bearbeitungszentrums befestigt.

Im Grundkörper 2 ist eine erste Linearführung 4 verschiebbar in der X-Richtung angeordnet. Parallel zur ersten Linearführung 4 ist eine zweite Linearführung 5 verschiebbar angeordnet. Durch die teleskopische Anordnung der ersten und der zweiten Linearführung 4,5 wird die Reichweite für die Bewegungen des Werkzeugwechslers 1 zwei mal so gross wie der Platzbedarf in Ruhezustand. Auf die zweite Linearführung 5 ist ein Wagen 6 linear verschiebbar angeordnet. Durch die teleskopische Anordnung der zwei Linearführungen 4.5 wird die Steifigkeit des Werkzeugwechslers 1 erhöht und die Reproduzierbarkeit der Bewegungen verbessert. Hierdurch werden Störungen im Betrieb des computergesteuerten Bearbeitungszentrums, das ohne personeller Aufsicht arbeiten soll, verhindert. Im Wagen 6 ist ein Lager 7 zur Lagerung auf der ersten Linearführung 4 angeordnet. Im Lager 7 ist eine Welle 8 drehbar um die Z-Achse gelagert angeordnet. Die Welle 8 verläuft von der Unterseite des Wagens 6 bis zum eigentlichen Werkzeugträger 15, der in diesem Ausführungsbeispiel zwei Zangen 16,17 aufweist. Die Zangen 16,17 dienen zum Festhalten der Werkzeuge.

An einer Trägerplatte 9 der zweiten Linearführung 5 ist eine Steuerrolle 10 lagernd befestigt. Die Steuerrolle 10 wirkt zusammen mit einer Kontur 11 an einer Steuerplatte 12 der Welle 8. Die Steuerplatte 12 ist fest verbunden mit der Welle 8, die in dem Wagen 6 drehbar gelagert ist. Hierdurch wird erreicht, dass am Ende der linearen Bewegung in der X-Richtung die Welle 8 eine Schwenkbewegung von etwa 90° um die Z-Achse in Bezug auf die zweite Linearführung 5 machen kann.

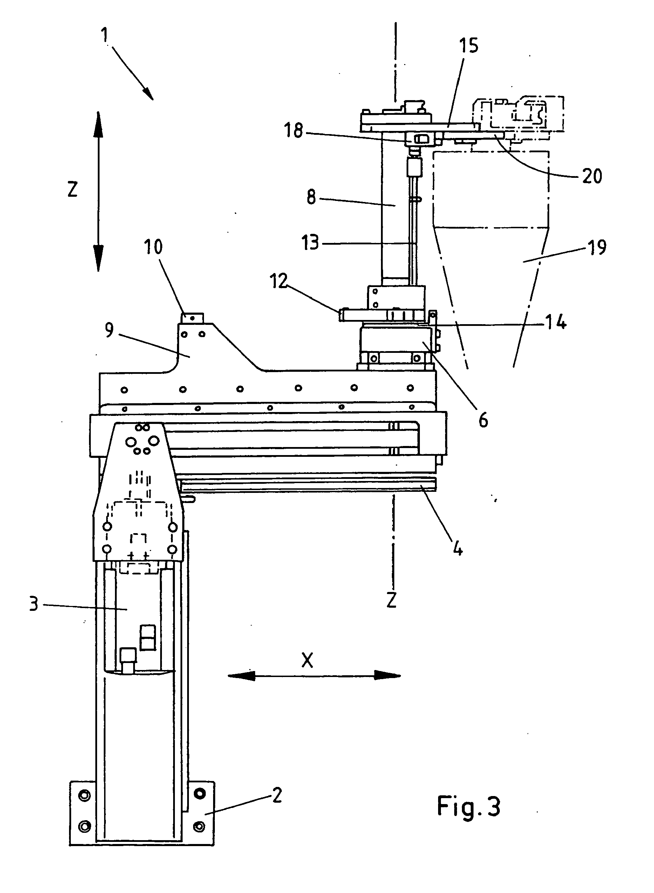

Parallel verlaufend zur Welle 8 ist eine Stange 13 angeordnet. Die Stange 13 wird von einer Nockenscheibe 14, die in Figur 3 dargestellt ist, in der Z-Richtung betätigt. Die Stange 13 dient zur Freigabe und zur Festsetzung der Werkzeuge in den Zangen 16,17 des Werkzeugträgers 15. Die Stange 13 und die Nockenscheibe 14 sind derart zu einander passend ausgebildet und angeordnet, dass erst in dem Moment, dass der Werkzeugträger 15 sich im Arbeitsraum unter der Spindel der Bearbeitungsmaschine befindet, die Zangen 16,17 betätigt werden können. Die Stange 13 wird von der Nockenscheibe 14 in der Z-Richtung zwischen zwei Stellungen, einer Verriegelungsstellung und einer Freigabestellung, bewegt. Das obere Ende der Stange 13 wirkt im Werkzeugträger 15 zusammen mit einer Verriegelungsvorrichtung 18. Die Verriegelungsvorrichtung 18 wirkt auf die Finger 20 der Zangen 16,17. Die Verriegelungsvorrichtung 18 verhindert, dass ein relativ schweres Werkzeug 19, das hier gestrichelt schematisch angedeutet ist, auch bei der Schwenkbewegung um fast 90° aus den Zangen 16,17 des Werkzeugträgers 15 geschleudert wird. Die Rückstellung wird erreicht durch die Kraft einer Feder, die entgegen der Bewegung der Stange 13 wirkt.

In Figur 3 ist der Werkzeugwechsler 1 gesehen in der Richtung der Y-Achse dargestellt. An der Trägerplatte 9 können weitere Bedienungselemente befestigt werden, beispielsweise weitere Steuernocken zur Öffnung der Türe zum Arbeitsraum des Bearbeitungszentrums. Hiermit wird erreicht, dass der eigentliche Arbeitsraum geschlossen bleibt, wenn sich der Wagen 6 mit dem Werkzeugträger 15 des Werkzeugwechslers 1 ausserhalb des Arbeitsraumes befindet. Zwischen der Steuerplatte 12 und dem Wagen 6 ist die Nockenscheibe 14 ersichtlich. Wenn die Steuerplatte 12 des Wagens 6 mit der Steuerrolle 10 im Eingriff gebracht wird, wird der Werkzeugträger 15 um etwa 90° in Gegenuhrzeigersinn geschwenkt und eine der Zangen 16,17 befindet sich genau unter der Spindel der Bearbeitungsmaschine. Am Ende der Steuerkurve der Steuerplatte 12 bewirkt die Nockenscheibe 14 die Betätigung der Stange 13. Die Nockenscheibe 14 ist wie ein Ring um die Welle 8 an der Oberseite des Wagens 6 befestigt und weist in Umfangsrichtung eine steigende Höhe oder Dicke in der Z-Richtung auf.

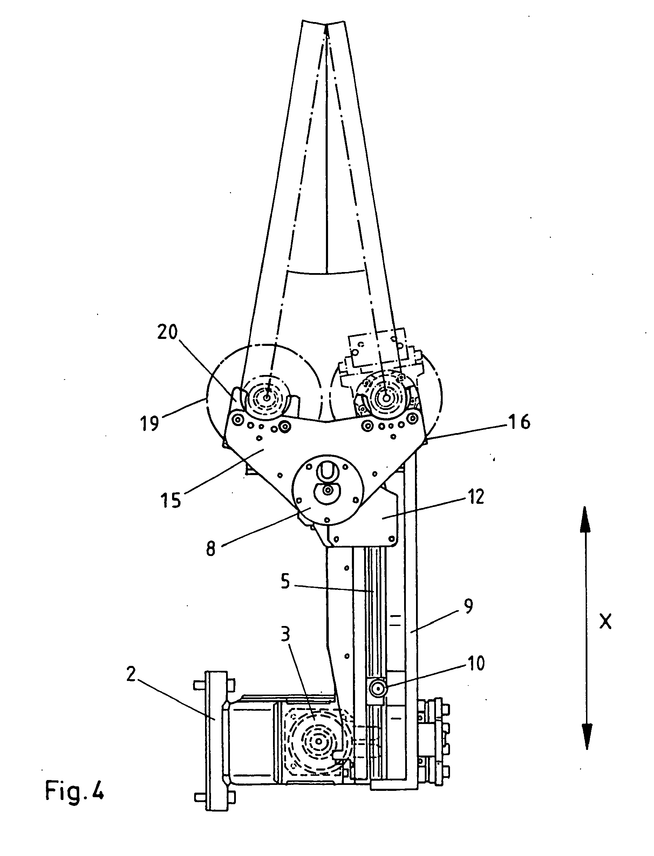

In Figur 4 ist der Werkzeugwechsler 1 in der Richtung der Z-Achse, das heisst von oben gesehen, dargestellt. Hier ist mit Strichlinien angedeutet, wie der Werkzeugwechsler 1 mit einer Übergabestation zusammen wirken kann. In der Übergabestation werden die Werkzeuge 19 ausgetauscht gegen weitere Werkzeuge aus einem Werkzeuglager, das hier nicht dargestellt ist. Der computergesteuerte Werkzeugwechsler 1 dient zum Transportieren der Werkzeuge 19 vom Werkzeuglager zur Spindel einer Hochgeschwindigkeitsfräse und zurück.

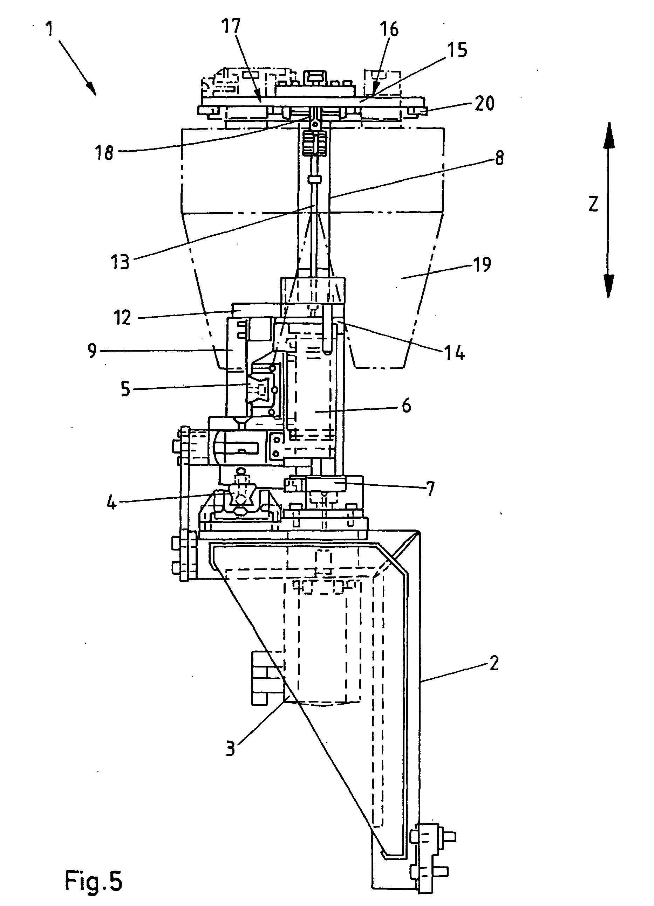

In Figur 5 ist der Werkzeugwechsler 1 gesehen in der Richtung der X-Achse dargestellt. Die gestrichelte Konturen der Werkzeuge 19 geben die maximale Grösse der Werkzeuge an, die mit dem Werkzeugwechsler 1 gewechselt werden können.

Die beweglichen Teilen des Werkzeugwechslers 1 sind mit mechanischen, beispielsweise Nocken, oder anderen berührungslosen Signalgebern ausgerüstet, die mit Sensoren am Bearbeitungszentrum zusammen arbeiten und Signale an der computergesteuerten Steuerungs- und Überwachungszentrale schicken.

Insgesamt wird mit dem Werkzeugwechsler 1 eine stabile, spielfreie, kompakte und Platz sparende Anordnung gegeben. Durch die teleskopartige Bewegung des Wagens 6 mit dem Werkzeugträger 15 in der X-Richtung befindet sich der Werkzeugträger 15 nur dann in dem Arbeitsraum, wenn das Werkzeug gewechselt werden muss. In der übrigen Bearbeitungszeit kann der Arbeitsraum der Bearbeitungsmaschine freigegeben werden.

## Patentansprüche

1. Werkzeugwechsler (1) zum automatischen Wechseln von Werkzeugen (19) für ein computergesteuertes Bearbeitungszentrum, umfassend einen Werkzeugträger (15) zum Tragen und Festhalten von mindestens zwei Werkzeugen (19), einen Antrieb (3) zur Bewegung des Werkzeugträgers (15), eine Führungsvorrichtung (4,5) mit einem Wagen (6) zur geführten Bewegung des Werkzeugträgers (15) und einen Grundkörper (2) zur Befestigung des Werkzeugwechslers (1) an dem Bearbeitungszentrum, wobei der Werkzeugträger (15) am einen Ende einer Welle (8) um eine Achse (Z) schwenkbar in Bezug auf den Grundkörper (2) und linear in einer senkrecht zur Z-Achse stehenden Hauptrichtung (X) bewegbar angeordnet ist, **dadurch gekennzeichnet, dass** parallel zur Welle (8) eine in der Z-Richtung bewegbare Stange (13) angeordnet ist, die zusammenwirkend mit einer Nockenscheibe (14) am Wagen (6) ausgebildet ist und dass zusammenwirkend mit der Stange (13) eine Verriegelungsvorrichtung (18) zur Verriegelung der Werkzeuge (19) in dem Werkzeugträger (15) angeordnet ist.

2. Werkzeugwechsler nach dem Anspruch 1, **dadurch gekennzeichnet, dass** die Führungsvorrichtung zwei teleskopartig bewegbare und zu einander parallel verlaufend angeordnete Linearführungen (4,5) zur Bewegung des Werkzeugträgers (15) in der X-Richtung aufweist.

3. Werkzeugwechsler nach einem der Ansprüche 1 oder 2, **dadurch gekennzeichnet, dass** das andere Ende der Welle (8) in einem Lager (7) in einem in der X-Richtung verschiebbaren Wagen (6) lagernd bewegbar angeordnet ist.

4. Werkzeugwechsler nach einem der Ansprüche 1 bis 4, **dadurch gekennzeichnet, dass** an der Welle (8) eine Steuerplatte (12) mit einer Steuerkontur (11) angeordnet ist.

5. Werkzeugwechsler nach Ansprüch 4 **dadurch gekennzeichnet, dass** an einer Trägerplatte (9) der zweiten Linearführung (5) eine Steuerrolle (10) ausgebildet ist, die zur Steuerung der Schwenkbewegung des Werkzeugträgers (15) zusammenwirkend mit der Steuerkontur (11) der Steuerplatte (12) ausgebildet ist.

6. Werkzeugwechsler nach einem der Ansprüche 1 bis 5, **dadurch gekennzeichnet, dass** der Werkzeugträger (15) mit einer Übergabestation zusammenwirkend zur Übergabe der Werkzeuge (19) ausgebildet ist.

## Claims

1. Tool changer (1) for the automatic changing of tools (19) for a computer-controlled machining centre, comprising a tool carrier (15) for carrying and retaining at least two tools (19), a drive (3) for moving the tool carrier (15), a guide device (4, 5), with a carriage (6), for the guided movement of the tool carrier (15), and a basic body (2) for fastening the tool changer (1) to the machining centre, the tool carrier (15) being arranged at one end of a shaft (8) so as to be pivotable about an axis (Z) with respect to the basic body (2) and so as to be movable linearly in a main direction (X) standing perpendicularly to the Z-axis, **characterized in that** a rod (13) movable in the Z-direction is arranged parallel to the shaft (8) and is designed to cooperate with a cam disc (14) on the carriage (6), and **in that** a locking device (18) for locking the tools (19) in the tool carrier (15) is arranged in cooperation with the rod (13).

2. Tool changer according to Claim 1, **characterized in that** the guide device has two telescopically movable linear guides (4, 5), arranged to run parallel to one another, for moving the tool carrier (15) in the X-direction.

3. Tool changer according to either one of Claims 1 and 2, **characterized in that** the other end of the shaft (8) is arranged in a bearing (7) so as to be movable, supported in a carriage (6) displaceable in the X-direction.

4. Tool changer according to one of Claims 1 to 3,
**characterized in that** a control plate (12) with a control contour (11) is arranged on the shaft (8).

5. Tool changer according to Claim 4, **characterized in that** a carrier plate (9) of the second linear guide (5) has formed on it a control roller (10) which is designed to control the pivoting movement of the tool carrier (15) in cooperation with the control contour (11) of the control plate (12).

6. Tool changer according to one of Claims 1 to 5, **characterized in that** the tool carrier (15) is designed to cooperate with a transfer station for the transfer of the tools (19).

## Revendications

1. Changeur d'outil (1) pour le changement automatique d'outils (19) pour un centre d'usinage à commande informatique, comprenant un porte-outil (15) pour porter et fixer au moins deux outils (19), un entraînement (3) pour le déplacement du porte-outil (15), un dispositif de guidage (4, 5) avec un chariot (6) pour le déplacement guidé du porte-outil (15), et un corps de base (2) pour la fixation du changeur d'outil (1) sur le centre d'usinage, le porte-outil (15) étant disposé de manière à pouvoir pivoter autour d'un axe (Z) à une extrémité d'un arbre (8), par rapport au corps de base (2), et de manière mobile linéairement dans une direction principale (X) perpendiculaire à l'axe Z, **caractérisé en ce que** parallèlement à l'arbre (8) est disposée une tige (13) mobile dans la direction Z, qui est réalisée de manière à coopérer avec un disque de came (14) sur le chariot (6) et **en ce qu'**un dispositif de verrouillage (18) est disposé dans le porte-outil (15) de manière à coopérer avec la tige (13) pour le verrouillage des outils (19).

2. Changeur d'outil selon la revendication 1,
**caractérisé en ce que** le dispositif de guidage présente deux guides linéaires (4, 5) mobiles de manière télescopique et s'étendant parallèlement l'un par rapport à l'autre, pour le déplacement du porte-outil (15) dans la direction X.

3. Changeur d'outil selon l'une quelconque des revendications 1 ou 2, **caractérisé en ce que** l'autre extrémité de l'arbre (8) est disposée de manière mobile avec support dans un palier (7) dans un chariot (6) déplaçable dans la direction X.

4. Changeur d'outil selon l'une quelconque des revendications 1 à 4, **caractérisé en ce qu'**une plaque de commande (12) avec un contour de commande (11) est disposée sur l'arbre (8).

5. Changeur d'outil selon la revendication 4, **caractérisé en ce qu'**un rouleau de commande (10) est réalisé sur une plaque de support (9) du deuxième guide linéaire (5), lequel est réalisé pour la commande du mouvement de pivotement du porte-outil (15) de manière à coopérer avec le contour de commande (11) de la plaque de commande (12).

6. Changeur d'outil selon l'une quelconque des revendications 1 à 5, **caractérisé en ce que** le porte-outil (15) est réalisé avec un poste de transfert de manière à coopérer pour le transfert des outils (19).
